# FASCICULE DE BREVET EUROPEEN

(11) **EP 2 886 782 B1**
(45) Date de publication et mention de la délivrance du brevet: **16.05.2018**
(21) Numéro de dépôt: 14198302.3
(22) Date de dépôt: 16.12.2014
(51) Int. Cl.: E06B 9/68, E06B 9/72, E06B 9/82, F16D 43/20

(54) **Système d'occultation comprenant un dispositif de fin de course d'enroulement ou de déroulement de son tablier**
Abdecksystem mit einer Endanschlagvorrichtung zum Wickeln und Abwickeln seines Behangs
Concealment system comprising a limit switch device for the winding or unwinding its canvas

(30) Priorité: 18.12.2013 FR 1362851
(43) Date de publication de la demande: 24.06.2015
(73) Titulaire: BUBENDORFF, 68220 Attenschwiller (FR)
(72) Inventeur: Birker, Arnaud, 68440 Dietwiller (FR); Bubendorf, M. Robert, 68220 Attenschwiller (FR); Evreux, Gérard, 74130 Ayze (FR)
(74) Mandataire: Rhein, Alain

(56) Documents cités:
- EP-A1- 1 329 582
- EP-A2- 0 864 722
- DE-A1-102005 051 641
- FR-A1- 2 790 032
- JP-A- 2000 240 382

## Description

La présente invention a trait à un système d'occultation motorisé comportant un dispositif motorisé d'entraînement en rotation autour d'un axe d'un arbre d'enroulement et de déroulement d'un tablier que comporte un système d'occultation, le dispositif motorisé d'entraînement comportant un dispositif de fin de course d'enroulement ou de déroulement. Cette invention concerne le domaine du bâtiment et, plus particulièrement, celui de la fabrication des systèmes d'occultation destinés à équiper une construction et adoptant, notamment, la forme d'un volet roulant ou analogue.

On connait, d'ores et déjà, un tel système d'occultation comportant un tablier ainsi qu'un arbre, mobile en rotation selon un axe, sur lequel s'enroule et à partir duquel se déroule ledit tablier. Ce système d'occultation comporte, encore, un dispositif motorisé d'entraînement en rotation dudit arbre, ce dispositif motorisé d'entraînement incorporant un moteur d'entraînement de cet arbre. Ledit système d'occultation comporte, également, un moyen de commande conçu pour commander l'interruption du fonctionnement du moteur d'entraînement, ceci en fin de course de déploiement ou de repliement du tablier. Un tel moyen de commande adopte, usuellement, la forme d'un interrupteur ou analogue, notamment positionné à l'intérieur d'une coulisse latérale de guidage du tablier ou sous la lame finale de ce tablier.

Un tel système d'occultation présente un certain nombre d'inconvénients.

Un premier inconvénient consiste en ce que, lorsque l'interrupteur est positionné à l'intérieur d'une coulisse, celui-ci peut être soumis à des salissures (terre, poussière, feuilles) susceptibles d'altérer son fonctionnement, subir des dégradations notamment lors d'une tentative d'effraction, ou encore être actionné de manière indue (là encore lors d'une tentative d'effraction) ce qui interrompra le déroulement du tablier alors que celui-ci n'a pas encore atteint sa position de fin de course. Une telle interruption peut, également, se produire pour un interrupteur implanté sous la lame finale, ceci lorsque cette lame finale rencontre un obstacle. Finalement, dans le cas d'un tablier comportant des lames ajourées, l'interruption du déroulement du tablier en fin de course maintiendra ce tablier dans une position ajournée ce qui laissera la possibilité de remonter au moins partiellement ce tablier en agissant sous ce dernier lors d'une tentative d'effraction.

On connait, également, des systèmes d'occultation comportant un moyen de commande de l'interruption du fonctionnement du moteur conçu, d'une part, pour relever le courant du moteur, d'autre part, pour comparer l'intensité relevée du courant avec une intensité de référence ou pour déterminer le déphasage de ce courant par rapport à la tension et, d'autre part, pour commander l'interruption du fonctionnement du moteur en cas de détection d'une valeur d'intensité ou de déphasage correspondant à une fin de course. Un tel moyen de commande nécessite des moyens particuliers pour relever l'intensité du courant ainsi que des moyens particuliers (notamment de type électronique, informatique, ou numérique) pour comparer les intensités ou pour déterminer le déphasage, ces moyens s'avérant complexes, fragiles, peu fiables, difficiles à mettre en oeuvre, et onéreux.

On connaît enfin le document FR 2790032 Al, qui décrit un dispositif d'arrêt automatique d'un moteur électrique tubulaire entraînant un tube d'enroulement d'un volet roulant, et qui correspond au préambule de la revendication 1.

La présente invention se veut de remédier aux inconvénients des dispositifs de fin de course et des systèmes d'occultation de l'état de la technique.

A cet effet, l'invention concerne un système d'occultation selon la revendication 1. Ainsi, le dispositif de fin de course du système d'occultation conforme à l'invention comporte au moins un moyen de maintien ainsi qu'au moins un moyen de commande qui sont de type mécanique ce qui permet, avantageusement, de simplifier la conception d'un tel dispositif, d'en réduire le coût ainsi que d'en améliorer substantiellement la fiabilité et la robustesse.

D'autres buts et avantages de la présente invention apparaîtront au cours de la description qui va suivre se rapportant au mode de réalisation qui n'est donné qu'à titre d'exemple indicatif et non limitatif. La compréhension de cette description sera facilitée en se référant aux dessins joints en annexe et dans lesquels :
- la figure 1 est une vue schématisée d'un système d'occultation comportant un dispositif d'entraînement ;
- la figure 2 est une vue schématisée et en écorché du dispositif d'entraînement d'un système d'occultation conforme à l'invention ;
- la figure 3 est une vue schématisée et en coupe selon III-III du dispositif d'entraînement illustré figure 2 ;
- la figure 4 est une vue schématisée et en coupe selon IV-IV du dispositif d'entraînement illustré figure 2 ;
- la figure 5 est une vue schématisée et en coupe selon V-V du dispositif d'entraînement illustré figure 2 ;

La présente invention concerne le domaine du bâtiment et, plus particulièrement, celui de la fabrication des systèmes d'occultation destinés à équiper une construction, plus particulièrement en venant se positionner dans une ouverture que comporte une telle construction et en étant associés à une porte, fenêtre ou analogue que comporte une telle construction et refermant une telle ouverture.

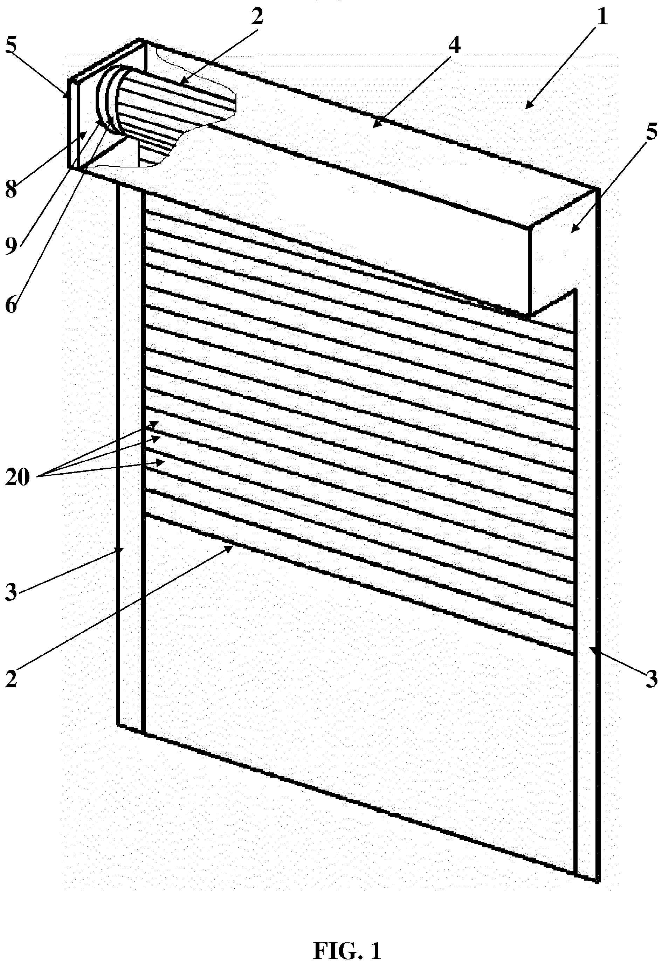

Un tel système d'occultation 1 peut adopter la forme d'un volet roulant (tel qu'illustré figure 1) sans que la présente invention y soit limitée.

Un tel système d'occultation 1 comporte, alors, un tablier 2 qui, dans le cas d'un système d'occultation 1 constitué par un volet roulant, peut être constitué par une succession de lames 20 articulées entre elles.

Ce système d'occultation 1 comporte, également, des coulisses latérales 3 à l'intérieur desquelles défilent les extrémités latérales des lames 20 du tablier 2 ainsi qu'un caisson 4, à l'intérieur duquel s'enroule et à partir duquel se déroule le tablier 2, et surmontant lesdites coulisses latérales 3. Ce caisson 4 est refermé latéralement par des joues support 5 notamment rendues solidaires fixement de ces coulisses latérales 3.

Ce système d'occultation 1 comporte, aussi, un arbre 6, monté à l'intérieur dudit caisson 4, mobile en rotation selon un axe A, sur lequel s'enroule et à partir duquel se déroule ledit tablier 2. Ce système d'occultation 1 comporte, alors aussi, un dispositif motorisé d'entraînement 7 en rotation dudit arbre 6 selon ledit axe A, ceci pour l'enroulement et le déroulement dudit tablier 2.

Ce dispositif motorisé d'entraînement 7 comporte une partie fixe 8, solidaire fixement d'une joue support 5, associée ou intégrée à une telle joue support 5, voire encore constituée par une telle joue support 5. Ce dispositif d'entraînement 7 comporte, aussi, un tube moteur 9 s'étendant selon ledit axe A, au moins en partie monté à l'intérieur dudit arbre 6, plus particulièrement de manière coaxiale et en sorte que cet arbre 6 soit mobile en rotation autour de ce tube moteur 9.

Ce dispositif motorisé d'entraînement 7 comporte, aussi, un moteur d'entraînement 10, conçu pour entraîner en rotation ledit arbre 6, apte à développer un couple moteur variable, et au moins en partie logé à l'intérieur dudit tube moteur 9.

En fait, un tel moteur d'entraînement 10 comporte, d'une part, un stator 100 monté fixement à l'intérieur dudit tube moteur 9 et, d'autre part, un rotor 101 comportant une partie qui s'étend en dehors du tube moteur 9 et qui est rendue solidaire fixement dudit arbre 6. Ce moteur d'entraînement 10 peut, encore, comporter un réducteur là encore monté fixement à l'intérieur dudit tube moteur 9.

Finalement, ce dispositif motorisé d'entraînement 7 comporte un dispositif 11 de fin de course d'enroulement ou de déroulement du tablier 2 que comporte le système d'occultation motorisé 1.

Selon l'invention, ce dispositif de fin de course 11 comporte ladite partie fixe 8 susmentionnée ainsi que le tube moteur 9 susmentionné qui est conçu pour recevoir intérieurement (et tel que décrit ci-dessus) au moins une partie du moteur d'entraînement 10 susmentionné.

Ce tube moteur 9 est mobile par rapport à la partie fixe 8, plus particulièrement en rotation autour de l'axe A de rotation dudit arbre 6. En fait, ce tube moteur 9 est mobile en rotation de part et d'autre d'un point fixe, plus particulièrement sur une course totale correspondant sensiblement à un quart de tour.

Le dispositif de fin de course 11 comporte, également, au moins un moyen de maintien 12 conçu, d'une part, pour maintenir le tube moteur 9 immobile par rapport à la partie fixe 8, ceci pour un couple moteur, exercé sur le tube moteur 9 par le moteur d'entraînement 10, et inférieur à un couple moteur déterminé et, d'autre part, pour autoriser le déplacement (plus particulièrement la rotation) de ce tube moteur 9 par rapport à la partie fixe 8, ceci en fin de course du tablier 2 et pour un couple moteur supérieur à ce couple moteur déterminé.

En fait, un tel moyen de maintien 12 est, alors, conçu pour maintenir le tube moteur 9 immobile, ceci en phase de déroulement ou d'enroulement du tablier 2 durant laquelle le moteur d'entraînement 10 exerce, d'une part et sur l'arbre 6, un couple moteur nominal et, d'autre part et sur le tube moteur 9, un couple moteur inférieur à un couple moteur déterminé qui peut correspondre à ce couple nominal.

Lorsque le tablier 12 arrive en fin de course de déroulement ou d'enroulement, l'arbre 6 est bloqué en rotation et le moteur d'entraînement 10 exerce sur le tube moteur 9 un couple moteur qui, lorsqu'il est supérieur à un couple moteur déterminé (pouvant correspondre au couple moteur nominal du moteur 10), autorise le déplacement (plus particulièrement la rotation) de ce tube moteur 9. Selon le type de réalisation correspondant au type préféré de réalisation de l'invention, le ou les moyens de maintien 12 comportent, d'une part, un organe 13 mobile par rapport à la partie fixe 8 et que comporte cette partie fixe 8, d'autre part, un moyen de réception 14, qui est conçu pour recevoir un tel organe mobile 13, qui est fixe par rapport au tube moteur 9 et que comporte ce tube moteur 9, et, d'autre part encore, un moyen 15 pour assurer la coopération entre un tel organe mobile 13 et un tel moyen de réception 14 d'un tel organe mobile 13. Un tel moyen 15 pour assurer la coopération entre un tel organe mobile 13 et un tel moyen de réception 14 est constitué par un moyen pour repousser l'organe mobile 13 en direction du moyen de réception 14. L' organe mobile 13 est constitué par une came 130 mobile en translation axiale selon ledit axe A tandis que le moyen de réception 14 est constitué par une came complémentaire 140, présentant une forme complémentaire à la came mobile 130. Dans ce premier mode de réalisation, le moyen 15 pour assurer la coopération (et, donc, le moyen pour repousser l'organe mobile 13 en direction du moyen de réception 14) est constitué par un ressort 150 s'étendant axialement selon ledit axe A et conçu pour repousser la came mobile 130 en direction de la came complémentaire 140.

En fait, la came mobile 130 et la came complémentaire 140 présentent des pentes (131; 141) destinées à coopérer entre elles.

Aussi et selon une caractéristique additionnelle de l'invention, la valeur des pentes des cames (130, 140) et la force de rappel du ressort 150 sont choisies en sorte que le ou les moyens de maintien 12 présentent un couple résistant au moins égal au couple moteur déterminé.

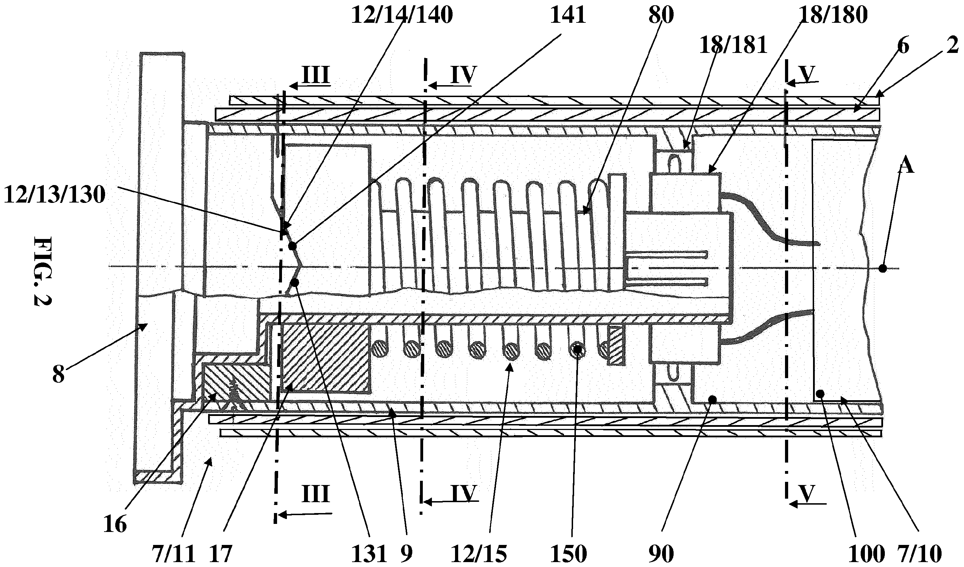

Il a été illustré figures 2 à 5 un tel mode de réalisation de l'invention, ceci pour le type de réalisation mentionné ci-dessus.

Selon ce mode de réalisation de ce type de réalisation, le dispositif de fin de course 11 comporte une bague de centrage 16, que comporte intérieurement le tube moteur 9, solidaire en rotation de ce tube moteur 9, et qui comporte la came complémentaire 140 du moyen de réception 14 du ou des moyens de maintien 12. Une telle came complémentaire 140 est orientée, voire s'étend, en direction de la came mobile 130 de l'organe mobile 13 du ou des moyens de maintien 12.

Dans un pareil cas, le dispositif de fin de course 11 comporte un chariot 17, que comporte la partie fixe 8, que comporte intérieurement le tube moteur 9, mobile en translation axiale selon ledit axe A, qui comporte la came mobile 130 de l'organe mobile 13 du ou des moyens de maintien 12. Une telle came mobile 130 est orientée, voire s'étend, en direction de la came complémentaire 140 susmentionnée du moyen de réception 14 du ou des moyens de maintien 12.

Selon le mode de réalisation du type de réalisation illustré figures 2 à 5, ce tube fixe 80 présente une section polygonale (de préférence carrée) tandis que le chariot 17 présente un orifice traversant, traversé par ledit tube fixe 80, présentant une section autorisant une translation de ce chariot 17 par rapport à ce tube fixe 80, ceci de manière libre et axiale selon ledit axe A. En fait, cette section de l'orifice traversant est complémentaire à celle (de préférence carrée) de ce tube fixe 80.

Selon une autre caractéristique, c'est, plus particulièrement, autour de ce tube fixe 80 qu'est engagé le ressort 150 du moyen 15 pour assurer la coopération et que comportent le ou les moyens de maintien 12.

En fait, ce tube fixe 80 est coaxial au tube moteur 9.

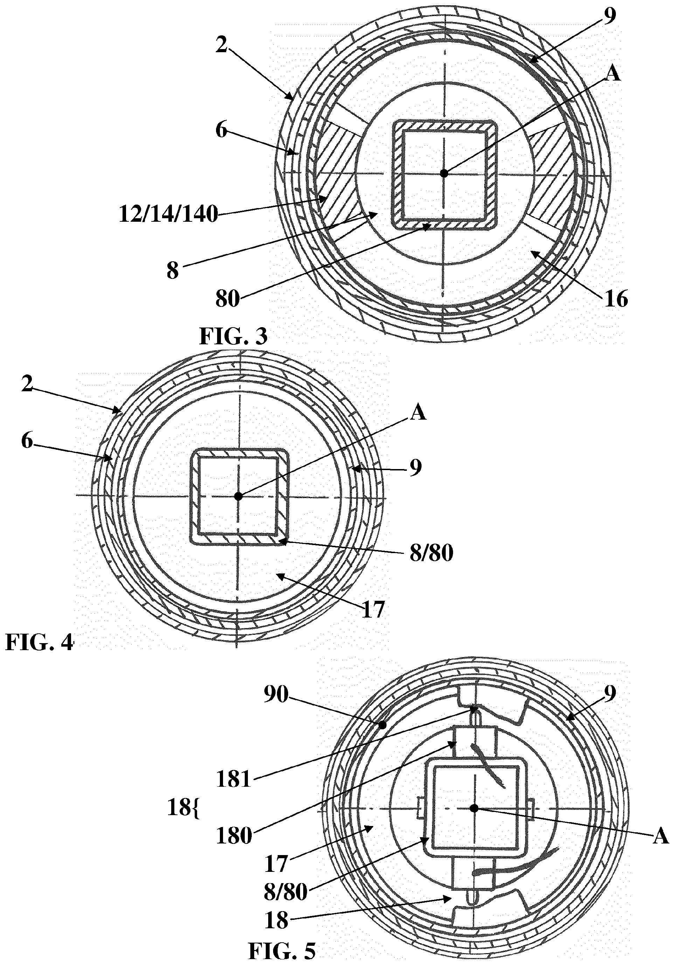

Une autre caractéristique de l'invention consiste en ce que le dispositif de fin de course 11 comporte une pluralité de moyens de maintien 12, plus particulièrement deux moyens de maintien 12 implantés de manière symétrique par rapport audit axe A comme visible figure 3.

Une autre caractéristique de l'invention consiste en ce que le dispositif de fin de course 11 comporte, encore, au moins un moyen de commande 18 pour commander l'interruption du fonctionnement du moteur 10, ceci en fin de course du tablier 2 et sous l'effet du déplacement (plus particulièrement de la rotation) du tube moteur 9.

En fait, ce ou ces moyens de commande 18 comportent, d'une part, un interrupteur 180 que comporte la partie fixe 8 et qui est raccordé (plus particulièrement de manière filaire) au moteur d'entraînement 10, d'autre part, un élément de commande 181, que comporte le tube moteur 9, solidaire en déplacement (plus particulièrement solidaire en rotation) de ce tube moteur 9, et adoptant une position inactive de coopération avec un tel interrupteur 180 lorsque le tube moteur 9 est immobile ainsi qu'une position active de coopération avec un tel interrupteur 180 sous l'effet du déplacement (plus particulièrement de la rotation) de ce tube moteur 9, ceci pour commander l'interruption du fonctionnement du moteur 10.

On observera qu'un tel interrupteur 180 est solidaire fixement de la partie fixe 8, plus particulièrement du tube fixe 80.

Tel que mentionné ci-dessus, le tube moteur 9 présente une paroi interne 90 tandis que l'élément de commande 181 est constitué par une surface de contact que comporte cette paroi interne 90 du tube moteur 9 ou que comporte une pièce (plus particulièrement sous forme d'un plot, d'un sabot ou analogue) équipant cette paroi interne 90, plus particulièrement en étant rapportée sur cette paroi interne 90 comme visible figures 5 et 8.

On observera qu'une telle surface de contact est située en vis-à-vis d'un interrupteur fixe 180.

Une autre caractéristique consiste en ce que la surface de contact présente une pente qui s'étend, par rapport à la paroi interne 90 du tube moteur 9, en divergeant.

Une autre caractéristique de l'invention consiste en ce que le dispositif de fin de course 11 comporte une pluralité de moyens de commande 18, plus particulièrement deux moyens de commande 18 implantés de manière symétrique par rapport audit axe A comme visible figures 5 et 8.

## Revendications

1. Système d'occultation (1), notamment de type volet roulant ou analogue, comportant un tablier (2), un arbre (6) d'enroulement et de déroulement de ce tablier (2), un dispositif motorisé d'entraînement (7) en rotation autour d'un axe (A) dudit arbre (6), ce dispositif motorisé d'entraînement (7) comportant :
- un moteur (10) d'entraînement en rotation dudit arbre (6), ce moteur (10) comportant, d'une part, un stator (100) monté fixement à l'intérieur d'un tube moteur (9) et, d'autre part, un rotor (101) comportant une partie qui s'étend en dehors du tube moteur (9) et qui est rendu solidaire fixement dudit arbre (6) ;
- un dispositif de fin de course (11) d'enroulement ou de déroulement du tablier (2), ce dispositif de fin de course (11):
- comportant :
- une partie fixe (8);
- le tube moteur (9);
- au moins un moyen de maintien (12) conçu, d'une part, pour maintenir le tube moteur (9) immobile par rapport à la partie fixe (8), ceci pour un couple moteur, exercé sur le tube moteur (9) par le moteur d'entraînement (10), et inférieur à un couple moteur déterminé et, d'autre part, pour autoriser le déplacement de ce tube moteur (9) par rapport à la partie fixe (8), ceci en fin de course du tablier (2) et pour un couple moteur supérieur à ce couple moteur déterminé ;
- au moins un moyen de commande (18) pour commander l'interruption du fonctionnement du moteur (10) en fin de course du tablier (2) et sous l'effet du déplacement du tube moteur (9) ; où
- le tube moteur (9) s'étend selon un axe (A) et est mobile en rotation autour de cet axe (A) ;
le système d'occultation étant **caractérisé par le fait que**:
- le ou les moyens de maintien (12) comportent :
- un organe mobile (13) par rapport à la partie fixe (8) et que comporte cette partie fixe (8), cet organe mobile (13) étant constitué par une came mobile (130) en translation axiale selon ledit axe (A) ;
- un moyen de réception (14), qui est conçu pour recevoir un tel organe mobile (13), qui est fixe par rapport au tube moteur (9), que comporte ce tube moteur (9), et qui est constitué par une came complémentaire (140), présentant une forme complémentaire à la came mobile (130) ;
- un moyen (15) pour assurer la coopération entre un tel organe mobile (13) et un tel moyen de réception (14) d'un tel organe mobile (13), un tel moyen (15) pour assurer la coopération étant constitué par un moyen pour repousser l'organe mobile (13) en direction du moyen de réception (14), ce moyen pour repousser étant constitué par un ressort (150) s'étendant axialement selon ledit axe (A) et conçu pour repousser la came mobile (130) en direction de la came complémentaire (140).

2. Système d'occultation (1) selon la revendication 1, **caractérisé par le fait que** la valeur des pentes (131 ; 141) des cames (130 ; 140) et la force de rappel du ressort (150) sont choisies en sorte que le ou les moyens de maintien (12) présentent un couple résistant au moins égal au couple moteur déterminé.

3. Système d'occultation (1) selon la revendication 1, **caractérisé par le fait que** le dispositif (11) comporte une bague de centrage (16), que comporte intérieurement le tube moteur (9), solidaire en rotation de ce tube moteur (9), et qui comporte la came complémentaire (140) du moyen de réception (14) du ou des moyens de maintien (12), une telle came complémentaire (140) étant orientée, voire s'étendant, en direction de la came mobile (130) de l'organe mobile (13) du ou des moyens de maintien (12).

4. Système d'occultation (1) selon la revendication 1, **caractérisé par le fait que** le dispositif (11) comporte un chariot (17), que comporte la partie fixe (8), que comporte intérieurement le tube moteur (9), mobile en translation axiale selon ledit axe (A), qui comporte la came mobile (130) de l'organe mobile (13) du ou des moyens de maintien (12), une telle came mobile (130) étant orientée, voire s'étendant, en direction de la came complémentaire (140) du moyen de réception (14) du ou des moyens de maintien (12).

5. Système d'occultation (1) selon la revendication 1, **caractérisé par le fait que** la partie fixe comporte (8) un tube fixe (80), que comporte intérieurement le tube moteur (9), qui s'étend axialement selon ledit axe (A), qui reçoit l'organe mobile (13) du ou des moyens de maintien (12) et par rapport auquel est monté en déplacement un tel organe mobile (13), respectivement qui reçoit le moyen de réception (14) du ou des moyens de maintien (12).

6. Système d'occultation (1) selon l'une quelconque des revendications précédentes, **caractérisé par le fait que** le ou les moyens de commande (18) comportent, d'une part, un interrupteur (180) que comporte la partie fixe (8) et qui est raccordé au moteur d'entraînement (10), d'autre part, un élément de commande (181), que comporte le tube moteur (9), solidaire en déplacement de ce tube moteur (9), et adoptant une position inactive de coopération avec un tel interrupteur (180) lorsque le tube moteur (9) est immobile ainsi qu'une position active de coopération avec un tel interrupteur (180) sous l'effet du déplacement de ce tube moteur (9), ceci pour commander l'interruption du fonctionnement du moteur (10).

7. Système d'occultation (1) selon la revendication 6, **caractérisé par le fait que** le tube moteur (9) présente une paroi interne (90) tandis que l'élément de commande (181) est constitué par une surface de contact que comporte cette paroi interne (90) du tube moteur (9) ou que comporte une pièce équipant cette paroi interne (90).

8. Système d'occultation (1) selon l'une quelconque des revendications précédentes, **caractérisé par le fait que** le tube moteur (9) s'étend selon l'axe (A) de rotation de l'arbre (6) d'enroulement et de déroulement du tablier (2).

## Patentansprüche

1. Abdecksystem (1), insbesondere der Art Rollladen oder dergleichen, umfassend eine Decke (2), eine Welle (6) zum Auf- und Abwickeln dieser Decke (2), eine motorangetriebene Antriebsvorrichtung (7) zum Antreiben in Drehung um eine Achse (A) der besagten Welle (6), wobei diese motorangetriebene Antriebsvorrichtung (7) Folgendes umfasst:
- einen Motor (10) zum Antrieben in Drehung der Welle (6), wobei dieser Motor (10) einerseits einen Stator (100), der fest in einem Motorrohr (9) montiert ist, und andererseits einen Rotor (101) umfasst, der einen Teil umfasst, der sich außerhalb des Motorrohrs (9) erstreckt und fest mit der besagten Welle (6) verbunden ist;
- eine Endanschlagvorrichtung (11) zum Auf- oder Abwickeln der Decke (2), wobei diese Endanschlagvorrichtung (11):
- Folgendes umfasst:
- einen feststehenden Teil (8);
- das Motorrohr (9);
- mindestens ein Haltemittel (12), das ausgelegt ist, um einerseits das Motorrohr (9) unbeweglich bezüglich des feststehenden Teils (8) zu halten, und zwar für ein Motordrehmoment, das durch den Antriebsmotor (10) auf das Motorrohr (9) ausgeübt wird und niedriger ist als ein bestimmtes Motordrehmoment, und andererseits, um die Verschiebung dieses Motorrohrs (9) relativ zu dem feststehenden Teil (8) zu erlauben, und zwar am Anschlagende der Decke (2) und für ein Motordrehmoment, das höher ist als dieses ermittelte Antriebsmoment;
- mindestens ein Steuermittel (18) zum Steuern der Unterbrechung des Betriebs des Motors (10) am Anschlagende der Decke (2) und unter der Wirkung der Verschiebung des Motorrohrs (9);
- wobei
- das Motorrohr (9) sich entlang einer Achse (A) erstreckt und um diese Achse (A) drehbar ist;
- wobei das Bedeckungssystem **dadurch gekennzeichnet ist, dass**:
- das bzw. die Haltemittel (12) Folgendes umfassen:
- ein Organ (13), das relativ zu dem feststehenden Teil (8) beweglich ist, welches dieser feststehende Teil (8) umfasst, wobei dieses bewegliche Organ (13) aus einem entlang der besagten Achse (A) axial translationsbewegliche Nocken (130) besteht;
- ein Aufnahmemittel (14), das ausgelegt ist, um ein solches bewegliches Organ (13) aufzunehmen, das relativ zu diesem Motorrohr (9) feststehend ist, welches dieses Motorrohr (9) umfasst und das aus einem ergänzenden Nocken besteht (140), der eine zum beweglichen Nocken (130) ergänzende Form aufweist;
- ein Mittel (15) zum Sicherstellen der Zusammenwirkung zwischen einem derartigen beweglichen Organ (13) und einem derartigen Mittel (14) zum Aufnehmen eines derartigen beweglichen Organs (13), wobei ein derartiges Mittel (15) zum Sicherstellen der Zusammenwirkung aus einem Mittel, um das bewegliche Organ (13) in Richtung auf das Aufnahmemittel (14) zu drücken, besteht, wobei dieses Mittel zum Drücken aus einer Feder (150) besteht, die sich axial entlang der besagten Achse (A) erstreckt und dazu ausgelegt ist, den beweglichen Nocken (130) in Richtung auf den ergänzenden Nocken (140) zu drücken.

2. Abdecksystem (1) nach Anspruch 1, **dadurch gekennzeichnet, dass** der Wert der Neigungen (131 ; 141) der Nocken (130 ; 140) und die Rückstellkraft der Feder (150) so gewählt sind, dass das bzw. die Haltemittel (12) ein Widerstandsmoment aufweisen, das mindestens gleich dem bestimmten Motordrehmoment ist.

3. Abdecksystem (1) nach Anspruch 1, **dadurch gekennzeichnet, dass** die Vorrichtung (11) einen Zentrierring (16) umfasst, welchen das Motorrohr (9) innen umfasst, der drehfest mit diesem Rohrmotor (9) verbunden ist und den ergänzenden Nocken (140) des Aufnahmemittels (14) des bzw. der Haltemittel (12) umfasst, wobei ein derartiger ergänzender Nocken (140) in Richtung auf den Nocken (130) des beweglichen Organs (13) des bzw. der Haltemittel (12) ausgerichtet ist, sogar sich erstreckt.

4. Abdecksystem (1) nach Anspruch 1, **dadurch gekennzeichnet, dass** die Vorrichtung (11) einen Schlitten (17) umfasst, welchen der feststehende Teil (8) umfasst, welchen das Motorrohr (9) innen umfasst, der axial translationsbedweglich entlang der besagten Achse (A) ist, das den beweglichen Nocken (130) des beweglichen Teils (13) des bzw. der Haltemittel (12) umfasst, wobei ein derartiger beweglicher Nocken (130) in Richtung auf den ergänzenden Nocken (140) des Aufnahmemittels (14) des bzw. der Haltemittel (12) ausgerichtet ist, sogar sich erstreckt.

5. Abdecksystem (1) nach Anspruch 1, **dadurch gekennzeichnet, dass** der feststehende Teil (8) ein feststehendes Rohr (80) umfasst, welches das Motorrohr (9) innen umfasst, das sich axial entlang der besagten Achse (A) erstreckt, das das bewegliche Organ (13) des bzw. der Haltemittel (12) aufnimmt und relativ zu dem ein derartiges bewegliches Organ (13) verschiebbar montiert ist, bzw. das das Aufnahmemittel (14) des bzw. der Haltemittel (12) aufnimmt.

6. Abdecksystem (1) nach einem der vorhergehenden Ansprüche, **dadurch gekennzeichnet, dass** das bzw. die Steuermittel (18) einerseits einen Schalter (180), welchen der feststehende Teil (8) umfasst und der mit dem Antriebsmotor (10) verbunden ist, andererseits ein Steuerelement (181), welches das Motorrohr (9) umfasst, das verschiebungsfest mit diesem Motorrohr (9) verbunden ist und eine inaktive Position des Zusammenwirkens mit einem derartigen Schalter (180), wenn das Motorrohr (9) umbeweglich ist, und eine aktive Position des Zusammenwirkens mit einem derartigen Schalter (180) unter der Wirkung der Verschiebung dieses Motorrohrs (9) annimmt, umfassen, und zwar um die Unterbrechung des Betriebs des Motors (10) zu steuern.

7. Abdecksystem (1) nach Anspruch 6, **dadurch gekennzeichnet, dass** das Motorrohr (9) eine Innenwand (90) aufweist, während das Steuerelement (181) aus einer Kontaktfläche besteht, welche diese Innenwand (90) des Motorrohrs (9) umfasst oder ein Teil, mit dem diese Innenwand (90) versehen ist, umfasst.

8. Abdecksystem (1) nach irgendeinem der vorhergehenden Ansprüche, **dadurch gekennzeichnet, dass** das Motorrohr (9) sich entlang der Drehachse (A) der Welle (6) zum Auf- und Abwickeln der Decke (2) erstreckt.

## Claims

1. Concealment system (1), namely such as a roller shutter or the like, including an apron (2), a shaft (6) for winding and unwinding this apron (2), a motorized device (7) for driving in rotation about an axis (A) of said shaft (6), this motorized driving device (7) including:
- a motor (10) for driving said shaft (6) in rotation, said motor (10) including, on the one hand, a stator (100) fixedly mounted inside a motor tube (9) and, on the other hand, a rotor (101) including a portion, which extends outside the motor tube (9) and which is made fixedly integral with said shaft (6);
- a limit-switch device (11) for winding or unwinding the apron (2), this limit-switch device (11) including:
- a fixed portion (8);
- the motor tube (9);
- at least one maintaining means (12) designed, on the one hand, for maintaining the motor tube (9) unmovable relative to the fixed portion (8), for a motor torque exerted onto the motor tube (9) by the driving motor (10) and lower than a determined motor torque and, on the other hand, for permitting the movement of the motor tube (9) relative to the fixed portion (8), at the end position of the apron (2) and for a motor torque higher than this determined motor torque;
- at least one control means (18) for controlling the interruption of the operation of the motor (10) at the end position of the apron (2) and under the action of the movement of the motor tube (9);
or
- the motor tube (9) extends along an axis (A) and is rotatable about this axis (A);
- the concealment system being **characterized in that**:
- the one or several maintaining means (12) include:
- an organ (13) movable relative to the fixed portion (8) and which this fixed portion (8) includes, this movable organ (13) consisting of a cam (130) movable in axial translation along said axis (A);
- a receiving means (14), which is designed for receiving such a movable organ (13), which is fixed relative to the motor tube (9) this motor tube (9) includes, and which consists of a complementary cam (140) having a shape complementary to the movable cam (130);
- a means (15) for ensuring the cooperation between such a movable organ (13) and such a means (14) for receiving such a movable organ (13), such means (15) for ensuring the cooperation consisting of a means for pushing the movable organ (13) towards the receiving means (14), said means for pushing consisting of a spring (150) extending axially along said axis (A) and designed for pushing the movable cam (130) towards the complementary cam (140).

2. Concealment system (1) according to claim 1, wherein the value of the slopes (131 ; 141) of the cams (130 ; 140) and the restoring force of the spring (150) are chosen so that the one or several maintaining means (12) have a resistive torque at least equal to the determined motor torque.

3. Concealment system (1) according to claim 1, wherein the device (11) includes a centering ring (16), which internally includes the motor tube (9), integral in rotation with this motor tube (9), and which includes the complementary cam (140) of the receiving means (14) of the one or several maintaining means (12), such a complementary cam (140) being oriented, even extending, towards the movable cam (130) of the movable organ (13) of the one or several maintaining means (12).

4. Concealment system (1) according to claim 1, wherein the device (11) includes a carriage (17), which the fixed portion (8) includes, which the motor tube (9) internally includes, movable in axial translation along said axis (A), which includes the movable cam (130) of the movable organ (13) of the one or several maintaining means (12), such a movable cam (130) being oriented, even extending, towards the complementary cam (140) of the receiving means (14) of the one or several maintaining means (12).

5. Concealment system (1) according to claim 1, wherein the fixed portion includes (8) a fixed tube (80), which the motor tube (9) internally includes, which extends axially along said axis (A), which receives the movable organ (13) of the one or several maintaining means (12) and relative to which such a movable member (13) is mounted in displacement or which receives the receiving means (14) of the one or several maintaining means (12), respectively.

6. Concealment system (1) according to any one of the preceding claims, wherein the one or several control means (18) include, on the one hand, a switch (180), which the fixed portion (8) includes and which is connected to the driving motor (10), on the other hand, a control element (181), which the motor tube (9) includes, integral in movement with this motor tube (9), and adopting an inactive position of cooperation with such a switch (180) when the motor tube (9) is unmovable and an active position of cooperation with such a switch (180) under the action of the movement of this motor tube (9), in order to control the interruption of the operation of the motor (10).

7. Concealment system (1) according to claim 6, wherein the motor tube (9) has an inner wall (90) while the control element (181) consists of a contact surface, which this inner wall (90) of the motor tube (9) includes or which a part equipping this inner wall (90) includes.

8. Concealment system (1) according to any one of the preceding claims, wherein the motor tube (9) extends along the axis (A) of rotation of the winding and unwinding shaft (6) of the apron (2).
